# EUROPÄISCHE PATENTSCHRIFT

(11) **EP 0 770 149 B1**
(45) Veröffentlichungstag und Bekanntmachung des Hinweises auf die Patenterteilung: **20.01.1999**
(21) Anmeldenummer: 96910851.3
(22) Anmeldetag: 30.04.1996
(51) Int. Cl.: C22B 7/04, C21B 3/04, C21B 3/06

(54) **VERFAHREN ZUR HERSTELLUNG VON HYDRAULISCHEN BINDEMITTELN UND/ODER LEGIERUNGEN WIE Z.B. EISENCHROM ODER EISENVANADIUM**
PROCESS FOR PRODUCING HYDRAULIC BINDERS AND/OR ALLOYS, E.G. FERROCHROMIUM OR FERROVANADIUM
PROCEDE DE PRODUCTION DE LIANTS HYDRAULIQUES ET/OU D'ALLIAGES TELS QUE DU FERROCHROME OU DU FERROVANADIUM

(30) Priorität: 02.05.1995 AT 244/95
(43) Veröffentlichungstag der Anmeldung: 02.05.1997
(73) Patentinhaber: HOLDERBANK FINANCIERE GLARUS AG, 8750 Glarus (CH)
(72) Erfinder: EDLINGER, Alfred, CH-5400 Baden (CH); GÖSSNITZER, Andreas, A-8700 Leoben (AT)
(74) Vertreter: Haffner, Thomas M., Dr.
(86) Internationale Anmeldenummer: AT9600085
(87) Internationale Veröffentlichungsnummer: WO9634989

(56) Entgegenhaltungen:
- EP-A- 0 707 083
- EP-A- 0 714 860
- WO-A-94/17214
- WO-A-95/07365
- WO-A-96/10097

## Beschreibung

Die Erfindung bezieht sich auf ein Verfahren zur Herstellung von hydraulischen Bindemitteln, Rohstahl und/oder Legierungen wie z.B. FeCr oder FeV aus chrom- und/oder vanadiumhaltigen basischen Stahlschlacken.

Für die Herstellung von Zementklinker und Spezialbinderqualitäten mit hohem α-Belitgehalt und hoher Endfestigkeit aus metallurgischen Schlacken wurde bereits vorgeschlagen, flüssige Schlacken aus Reduktionsprozessen und Stahlwerksprozessen miteinander zu vermischen und erforderlichenfalls mit Kalk zu versetzen. Beim Vermischen von sauren flüssigen Schlacken, wie sie beispielsweise im Hochofenprozeß anfallen, und basischen Stahlwerks schlacken , wie sie beispielsweise als Konverterschlacke anfallen, wird Wärme frei, da es sich um eine exotherme Neutralisationsreaktion handelt.

Für die Herstellung hydraulischer Bindemittel war in der Regel ein relativ hoher Hochofenschlackenanteil erforderlich. Derartige Hochofenschlacken haben neben klassischem Portlandzement als Hüttenzemente große Bedeutung erlangt. Hüttenzemente im engeren Sinn sind hier feingemahlene Gemische aus Gips, Klinker und Hochofenschlacke, wobei ebenso wie bei Portlandzement in der Regel etwas Gips zur Regelung der Bindezeit zugesetzt wurde.

Die Verwendbarkeit von basischen Schlacken, wie sie aus Stahlwerksprozessen beispielsweise als LD-Schlacken anfallen, ist zumeist wesentlich eingeschränkt. Auch die Entsorgung von Elektro-Lichtbogen-Ofenschlacken gestaltet sich ebenso wie von Stahlschlacken relativ aufwendig. Gegenwärtig werden Stahlwerksschlacken und Elektro-Lichtbogen-Ofenschlacken beispielsweise in den Hochofen rückgeführt, wobei der Rest im Straßenbau verwendet wird bzw. deponiert wird. Aufgrund steigender Schrotteinsatzquoten steigt aber der Schwermetallgehalt und insbesondere der Gehalt von Chrom und Vanadin in Stahlschlacken und Elektro-Lichtbogen-Ofenschlacken ständig an, sodaß bei zunehmender Konzentration an derartigen Schwermetallen eine einfache Verhaldung nicht mehr zulässig erscheint. Derartige Schlacken müßten in der Zukunft vermutlich auf Sondermülldeponien gelagert werden, deren Betrieb aber mit erheblichen Kosten verbunden ist.

Stahlschlacke zeichnet sich durch einen relativ hohen Eisenoxidgehalt bedingt durch den Frischprozeß aus. Übliche Stahlschlacke enthält Manganoxid und Eisenoxid in einem Ausmaß, welches bis zu 33 Gew.% betragen kann. Hochofenschlacke zeichnet sich durch relativ günstige hydraulische Eigenschaften aus. Darüber hinaus enthält Hochofenschlacke einen wesentlich geringeren Eisenoxidgehalt, wodurch die Verwertung als Baugrundstoff wesentlich erleichtert ist.

Bei der Herstellung von hydraulischen Bindemitteln erfahren Bindemittelzusatzstoffe, welche Abbindezeit, Zeitfestigkeit und andere für Bindemittel wesentliche Parameter beeinflussen, eine immer größere Bedeutung. Derartige Zusatzstoffe können im Zusammenhang mit konventionellen hydraulischen Bindemitteln, wie beispielsweise Hüttenzementen oder Portlandzementen, zur Einstellung der gewünschten Eigenschaften verwendet werden.

Die Erfindung zielt nun darauf ab, vor allen Dingen für die problematisch zu entsorgenden Stahlschlacken eine weitere wirtschaftliche Nachbehandlung und Veredelung zu ermöglichen, welche unmittelbar hydraulische Bindemittel und Rohstahl oder Legierungen aus Stahlschlacke erzielen läßt. Insbesondere zielt die Erfindung dabei darauf ab, aus basischen Stahlschlacken ohne aufwendige Röst-Laugungsprozesse Chrom und Vanadium in hoher Reinheit zu gewinnen, wobei gleichzeitig die ursprüngliche chrom- und vanadiumhältige Schlacke quantitativ von Metallen, wie beispielsweise Mangan, gereinigt werden kann, sodaß eine überaus reine Schlacke gewonnen werden kann, welche in der Folge beispielsweise zu hydraulisch aktiven Bindemitteln bzw. Bindemitteladditiven aufgearbeitet werden kann. Zur Lösung dieser Aufgabe besteht die erfindungsgemäße Verfahrensweise im wesentlichen darin, daß die flüssige Stahlschlacke mit einem Zusatz aus der Gruppe Hochofenschlacke, Elektro-Lichtbogen-Ofenschlacke, Stäube aus der Stahlherstellung, metallischen Abfallstoffen oder Müllverbrennungsrückständen und/oder mit sauren Additiven zur Absenkung der Viskosität versetzt wird, worauf Stahl aus der flüssigen Schlacke sedimentiert wird, und die verbleibende Schlacke in einer ersten Reduktionsstufe auf einen Eisenoxidgehalt von unter 5 Gew.% und über 1 Gew.% zu metallischem Eisen reduziert wird, worauf die verbleibende Schackenschmelze in einer zweiten Reduktionsstufe mit gegenüber der ersten Reduktionsstufe größerem Reduktionspotential zu metallischem Cr oder V oder deren Eisenlegierungen weiter reduziert wird und die hydraulisch aktive Schlacke abgetrennt wird.

Dadurch, daß die flüssige Stahlschlacke eingesetzt wird, wird zum einen die latente Wärme der Stahlschlacke nach dem Frischprozeß weitestgehend ausgenützt und dadurch, daß nun Zusätze aus der Gruppe Hochofenschlacke, Elektro-Lichtbogen-Ofenschlacke, Stäube aus der Stahlherstellung, metallische Abfallstoffe oder Müllverbrennungsrückstände zugesetzt werden, wird nun insgesamt eine Mischschlacke geschaffen, welche in besonders einfacher Weise weiterbehandelt werden kann, um bei gleichzeitiger Rückgewinnung eines Metallbades eine Schlacke zu bilden, welche sich durch gute hydraulische Eigenschaften auszeichnet. Bei der Vermischung von flüssigen Stahlschlacken mit den genannten Zusätzen wird zunächst aufgrund der exothermen Schlackenreaktion bedingt durch die Redoxprozesse und die Säure/Baseneutralisation eine Temperaturanhebung erzielt, sodaß das zusätzliche Energieeinbringen minimiert werden kann. Gleichzeitig sinkt die Schmelzviskosität verglichen zu den Ausgangsschlacken markant ab. Da flüssige Stahlschlacke einen relativ hohen Stahlgehalt aufweist, welcher dispergiert in der Stahlschlacke vorliegt, kann bei gleichzeitiger deutlicher Absenkung der Schmelzviskosität der Schlacke ein rasches Sedimentieren dieses Stahlanteiles sichergestellt werden, sodaß unmittelbar nach dem Vermischen der flüssigen Stahlschlacke mit den genannten Zusätzen eine erste Abtrennung von Stahl nach einer Sedimentation erfolgen kann. Dadurch, daß nun die verbleibende Schlackenmischung in einen Reduktionsreaktor unter Zugabe von Kohle oder Koks eingebracht wird, gelingt es, den durch die Stahlschlacke bedingten relativ hohen Eisenoxidgehalt entsprechend abzusenken und dadurch, daß erfindungsgemäß eine Absenkung auf unter 5 Gew.% erfolgt, wobei ein Mindesteisenoxidgehalt von 1 Gew.% aufrecht erhalten wird, wird sichergestellt, daß edlere Metalle wie z.B. Chrom und Vanadium in der Schlacke verbleiben und in einer zweiten, nachgeschalteten Reduktionsstufe quantitativ und mit höherer Reinheit abgetrennt werden können. Dadurch, daß die verbleibende Schlackenschmelze in einer zweiten Reduktionsstufe mit gegenüber der ersten Reduktionsstufe größerem Reduktionspotential reduziert wird, gelingt es, Vanadium und ggf. Chrom selektiv zu reduzieren und eine hydraulisch aktive Schlacke mit überaus hoher Reinheit zu erlangen. Durch die zweistufige Verfahrensführung gelingt es, in der ersten Reduktionsstufe den überwiegenden Teil von Metallen, welche in der Folge die Rückgewinnung von Chrom und Vanadium erschwerden würde, bereits weitestgehend quantitativ abzutrennen. Erst in der zweiten Reduktionsstufe wird mit dem entsprechend größeren Reduktionspotential unmittelbar Vanadium bzw. Chrom in metallischer Form oder in Form von Ferrovanadium oder Ferrochrom gewonnen.

Um Chrom und Vanadium sicher in der Schlacke zu halten, wird mit Vorteil das Verfahren so durchgeführt, daß der Eisenoxidgehalt der Schlacke in der ersten Reduktionsstufe größer als 2 Gew.% gehalten wird.

In besonders vorteilhafter Weise wird das erfindungsgemäße Verfahren so durchgeführt, daß die Schlackenmischung im Reduktionsreaktor bei Temperaturen von 1400° C bis 1550° C, insbesondere 1450° C wenigstens 30 Minuten, vorzugsweise 1 Stunde reduziert wird. Bei den genannten Temperaturen im Reduktionsreaktor ist die gewünschte Abscheidung der Schwermetalle quantitativ möglich, und es wird eine besonders reine Endschlacke gebildet.

Zur Absenkung der Schlackenviskosität kann mit Vorteil so vorgegangen werden, daß als saure Additive SiO₂- und/oder Al₂O₃-haltige Additive wie z.B. Sand, Bauxit oder Mergel eingesetzt werden. In der ersten Reduktionsstufe kann hierbei mit Kohlenstoffträgern, wie z.B. Koks Kohle oder Synthesegas gearbeitet werden, wobei mit Vorteil die erste Reduktion über einem Eisenbad geführt wird. Auf diese Weise wird eine entsprechend milde Reduktion in der ersten Reduktionsstufe sichergestellt und ein vorzeitiges Reduzieren von Chrom und Vanadium sowie ggf. weiteren, entsprechend unedleren Metallen verhindert. Dadurch, daß gleichzeitig bei einer ersten Reduktion bereits Roheisen gebildet wird, steht in einem derartigen ersten Reduktionsreaktor die Schlacke im Gleichgewicht mit dem Metallbad und im Gleichgewicht mit den Reduktionsmitteln, wobei hier aufgrund der Reduktionsvorgänge ein zusätzliches Energieeinbringen auf ein Minimum reduziert werden kann. Das gebildete Roheisen bzw. die gebildete Legierung kann von der gebildeten hydraulisch aktiven Schlacke bei Temperaturen von 1400 bis 1600° C leicht getrennt werden, und es ist eine einfache weitere Aufarbeitung möglich. Ein zusätzliches Energieeinbringen kann in der ersten Reduktionsstufe in einfacher Weise dadurch erfolgen, daß Sauerstoff durch das Eisenbad und/oder auf das Schlackenbad geblasen wird, wobei ein derartiger Sauerstoff in Form von Luftsauerstoff aufgebracht werden kann. Durch Aufblasen auf das Schlackenbad wird gebildetes Kohlenmonoxid verbrannt und auf die Art und Weise zusätzliche thermische Energie zur Verfügung gestellt.

Die Reduktion unter entsprechend stärker reduzierenden Bedingungen wird mit Vorteil so durchgeführt, daß die zweite Reduktion unter Zusatz von Ca, Al, Si und Fe als Reduktionsmittel vorgenommen wird, wobei vorzugsweise die Reduktionsmittel für die zweite Reduktion einem Eisenbad zudosiert werden. Im Falle der Verwendung eines Eisenbades für die zweite Reduktion kann eine Vanadiumkonzentration im Eisenbad von wenigstens 40 % erzielt werden. Die Vanadiumkonzentration kann hiebei bis zu 80 Gew.% betragen, wobei das erhaltene Ferrovanadium sich durch extrem niedrige Kohlenstoffgehalte auszeichnet und weitgehend frei von Mangan und Chrom ist. Falls im erhaltenen Ferrovanadium noch überschüssiges Reduktionsmaterial (Ca, Al, Si) gelöst sein sollte, so kann dies sehr einfach mit V₂O₅ oder V₂O₅-hältigem Material sehr selektiv herausgefrischt und verschlackt werden.

Um einen überflüssigen Abbrand der Reduktionsmittel zu verhindern, wird mit Vorteil die zweite Reduktion unter wenigstens teilweise inertisierter Atmosphäre vorgenommen. Die Inertisierung kann durch Verwendung einer Stickstoff- oder Argonatmosphäre erzielt werden, wobei bei Verwendung von Al als Reduktionsmittel N₂ als Inertgas wegen der Aluminiumnitridbildung nicht verwendbar ist. Calzium kann hiebei als Calziumdraht zugeführt werden, wobei die Reduktionsmittel gemeinsam, sequenziell oder alleine zum Einsatz gelangen können. Die erhaltene, vanadiumfreie Schlackenschmelze kann mit Vorteil in der Folge mit Wasser granuliert und zu hydraulisch aktiven Bindemitteln bzw. Bindemitteladditiven aufgearbeitet werden. Die erhaltenen aktiven Bindemittel bzw. Bindemitteladditive zeichnen sich durch überaus hohe Reinheit gegenüber anderen Hüttenzementen aus.

Um die Wärmebilanz des Verfahrens entsprechend zu verbessern, wird mit Vorteil so vorgegangen, daß die sauren Additive vorgewärmt in die flüssige Schlacke eingebracht werden. Im Zuge der ersten Reduktion kann im Falle der Verwendung von festen Kohlenstoffträgern in erster Linie Kohlenmonoxid gebildet werden, welches in der Folge nachverbrannt werden kann und zur Vorwärmung der Additive verwendet werden kann. Im Falle der Verwendung von Erdgas oder Synthesegas entsteht aus dem Kohlenwasserstoff auch Wasserstoff, wobei dieser Wasserstoff als zusätzliches Reduktionsmittel wirksam wird. Verbleibender Wasserstoff kann gleichfalls in der Folge verbrannt werden und zur Vorwärmung von Additiven herangezogen werden. Der bei diesem ersten Reduktionsprozeß im Eisenbad gelöste Kohenstoff führt zu einer Reduktion an der Grenzfläche zwischen Eisenbad und Schlackenschmelze, wohingegen die gasförmigen Bestandteile Wasserstoff und Kohlenmonoxid die Reduktion der Schlacke dadurch sicherstellen, daß die Gasblasen im Eisenbad entwickelt werden und durch die flüssige Schlacke aufsteigen.

Um die entsprechende Viskosität für den Durchtritt von gasförmigen Reduktionsmitteln zu gewährleisten, wird mit Vorteil so vorgegangen, daß die zweite Reduktionsstufe elektrisch beheizt betrieben wird.

Die chrom- bzw. vanadium-freie Schlacke kann in einfacher Weise mit Wasser granuliert und zu hydraulisch aktiven Bindemitteln bzw. Bindemitteladditiven aufgearbeitet werden, wobei hier eine überaus reine Schlacke als Ausgangsmaterial zur Verfügung steht.

Insgesamt läßt sich die jeweils für die Reduktionsstufen erforderliche Verfahrenstemperatur hier besonders einfach steuern. Die elektrische Heizeinrichtung für die zweite Reduktionsstufe kann mit einfachen konventionellen Regelungen betrieben werden, wohingegen in der ersten Reduktionsstufe durch selektives Dosieren von Sauerstoff die entsprechende Temperatur aufrecht erhalten werden kann. Das mit Kohlenstoff in der ersten Reduktionsstufe im wesentlichen gesättigte Metallbad führt bei Hindurchleiten von Sauerstoff zu einer Kohlenstoffvergasung, wobei Kohlenmonoxid gebildet ist, welches mit entsprechend hoher Temperatur aus dem Reduktionsreaktor abgezogen werden kann und im Prozeß energieliefernd eingesetzt werden kann.

Mit Vorteil kann aber auch im Rahmen des erfindungsgemäßen Verfahrens so vorgegangen werden, daß dem aufschwimmenden Schlackenbad im Reduktionsreaktor Quarzsand zugesetzt wird und daß das Metallbad zu Stahl gefrischt wird. Durch die Zugabe von Quarzsand kann die Schlackenschicht im wesentlichen sauer gestellt werden, und das Roheisenbad kann in besonders einfacher Weise zu chromfreiem Roheisen gefrischt werden. In diesem Fall vergast ein Teil des Kohlenstoffes zu Kohlenmonoxid, wobei die Schwermetalle Vanadium, Mangan und Chrom mit dem Sauerstoff verschlacken. Ein derartiger Frischvorgang führt zu einem im wesentlichen schwermetallfreien Roheisen sowie einem konzentrierten Schlackenmaterial, aus welchem in besonders einfacher Weise Chrom bzw. Vanadium rückgewonnen werden können. Mit Vorteil wird daher das erfindungsgemäße Verfahren so durchgeführt, daß der Reduktionsreaktor so lange betrieben wird, bis die Schlackenmenge 10 Gew.% bis 20 Gew.% bezogen auf das Metallbad erreicht, worauf das Roheisen zu Stahl gefrischt und Cr, V und weitere Legierungselemente verschlackt werden, wobei in vorteilhafter Weise die gebildete Chromschlacke zur Herstellung von Ferrochrom eingesetzt wird.

Bei einem derartigen Frischvorgang kann naturgemäß in einfacher Weise auch Phosphor und nach dem Frischen Schwefel entfernt werden.

Um eine Überhitzung im Frischprozeß zu verhindern, kann mit Vorteil das Frischbad durch Zugabe von Schrott oder Eisencarbid gekühlt werden.

Mit Vorteil wird flüssige Stahlschlacke in einer Menge von 50 bis 70 Gew.% der Schlackenmischung eingesetzt, woraus ersichtlich ist, daß relativ große Anteile von bisher schwer verwertbarer Stahlwerksschlacke auf diese Weise einer wirtschaftlichen Aufbereitung unterworfen werden können. Um den Energieaufwand entsprechend herabzusetzen, wird mit Vorteil so vorgegangen, daß die Einsatzstoffe für die Schlackenmischung flüssig miteinander vermischt werden und in einem kippbaren Konverter vermischt werden, wobei mit einem derartigen kippbaren Konverter die gebildete Schlackenmischung und das sedimentierte Rohstahlbad gesondert durch Dekantieren abgegossen werden kann.

Die Erfindung wird nachfolgend anhand von Ausführungsbeispielen näher erläutert. Zu den nachfolgend verwendeten chemischen Analysen ist vorab folgendes festzuhalten:

Die Analysenwerte für Fe in den Schlacken werden üblicherweise als Fe₂O₃ angeben. In Wirklichkeit liegt jedoch das in der Schlacke gelöste Eisen überwiegend in der 2-wertigen Form vor. Ähnliches gilt für Mangan. Auch Schwefel liegt überwiegend in der sulfidischen Form vor, wird jedoch in den Analysen als "SO₃" angegeben. Cr und V wechseln sehr leicht die Wertigkeitsstufen. So liegt V in folgenden Stufen vor: +5/ +4/ +3/ +2. Der Einfachheit halber wird V als V₂O₅ angegeben. Die analytische Differenzierung der einzelnen Wertigkeitsstufen gestaltet sich nämlich sehr schwierig.

### Beispiel 1:

Die eingesetzte Schlacke entsprach typisch der nachfolgenden Analyse:

| Komponente | Anteil % |
|---|---|
| SiO₂ | 8.8 |
| Al₂O₃ | 1.5 |
| Fe₂O₃ | 31.4 |
| CaO | 33.3 |
| MgO | 3.3 |
| SO₃ | 0.36 |
| K₂O | 0.15 |
| Na₂O | 0.08 |
| TiO₂ | 9.7 |
| Cr₂O3 (Cr) | 0.13 (0.092) |
| Mn₂O₃ | 3.16 |
| P₂O₅ | 1.7 |
| V₂O₅ (V) | 4.3 (2.9) |
| Summe | 98.32 |

1 t dieser Schlacke enthält noch ca. 112 kg Rohstahl in Form von Tröpfchen (ca. 2 - 8 mm Tröpfchendurchmesser) dispergiert.

Zu 1 t LDS wurden 220 kg Sand (98 % SiO₂) zugegeben, sodaß sich folgende Mischschlackenzusammensetzung (1220 kg) ergibt.

| Komponente | Anteil % |
|---|---|
| SiO₂ | 22 |
| Al₂O₃ | 1 |
| Fe₂O₃ | 26 |
| CaO | 28 |
| MgO | 2.7 |
| SO₃ | 0.3 |
| K₂O | 0.1 |
| Na₂O | 0.1 |
| TiO₂ | 8.1 |
| Cr₂O₃ (Cr) | 0.11 (0.08) |
| Mn₂O₃ | 3 |
| P₂O₅ | 1.4 |
| V₂O₅ (V) | 3.6 (2.4) |

Aus dieser Mischschlacke sedimentierte bei 1630° der dispergierte Rohstahl. Da die Schlackenschmelze bereits bei 1400° sehr dünnflüssig ist, können bei dieser Temperatur "eingefrorene" Stahltröpfchen ebenfalls aussedimentieren. Diese Vorgangsweise kann sehr vorteilhaft sein, da durch die verminderte Temperatur das Feuerfest-Material wesentlich weniger stark angegriffen wird. Diese entstandene Mischschlacke wurde nun im Eisenbad reduziert, sodaß die "reduzierten" Oxide von Eisen, Phosphor, Chrom und Mangan in das Eisenbad sedimentierten.

Die verbliebene, reduzierte Mischschlacke wies die folgende Zusammensetzung auf:

| Komponente | Anteil % |
|---|---|
| SiO₂ | 32 |
| Al₂O₃ | 1.5 |
| Fe₂O₃ | - |
| CaO | 41 |
| MgO | 4 |
| S03 | 0.4 |
| K20 | 0.15 |
| Na₂O | 0.15 |
| TiO₂ | 11.8 |
| Cr₂O₃ (Cr) | - |
| Mn₂O₃ | - |
| P₂O₅ | - |
| V₂O₅ (V) | 5.25 (3.5) |
| CaO/SiO₂ | 1.28 |

Nach dieser Reduktionsstufe lag alles V praktisch in der +2 Wertigkeitsstufe vor.

Der entsprechende Metall-Regulus ("Roheisen") wies folgende Zusammensetzung auf:

| Komponente | Anteil % |
|---|---|
| P | 3.1 |
| Cr | 0.4 |
| Mn | 10.3 |
| Fe | 85.4 |

Die so entstandene, reduzierte Schlacke wurde einem in der Zeichnung schematisch dargestellten Vanadiumreaktor zugeführt.

In der Zeichnung ist in Fig.1 schematisch die Gesamtanlage ersichtlich. In Fig.2 ist eine modifizierte Ausbildung eines Reduktionsreaktors für die erste Reduktionsstufe und in Fig.3 eine Ausbildung eines Reduktionsreaktors für die zweite Reduktionsstufe dargestellt.

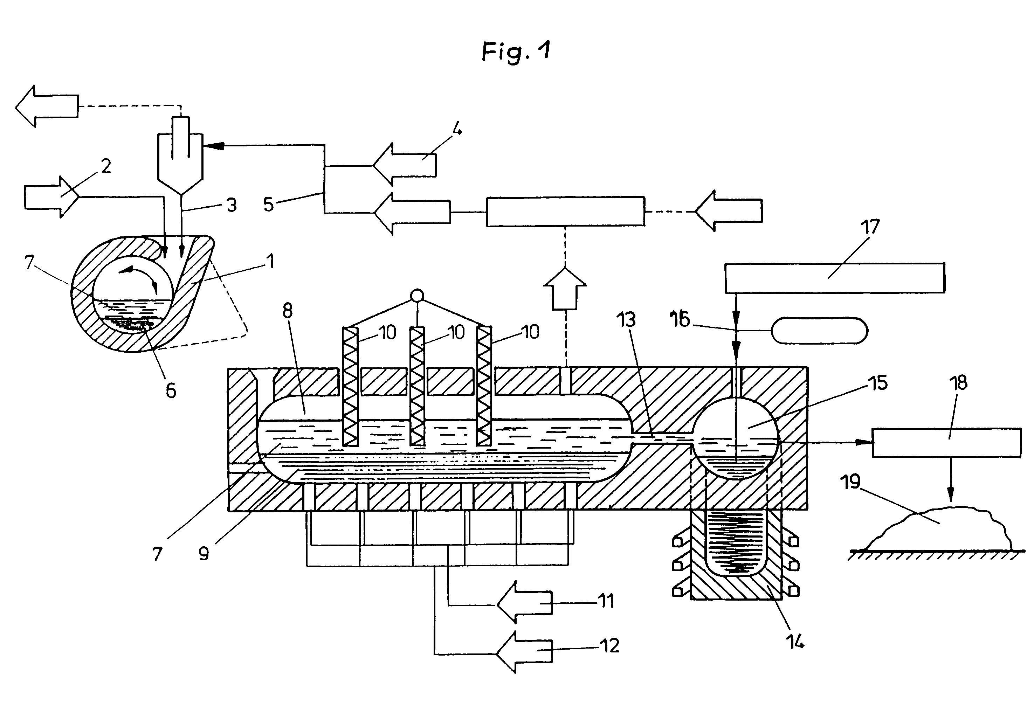

In Fig.1 ist mit 1 der Mischer bezeichnet, in welchem die schmelzflüssige Schlacke, welche schematisch mit 2 bezeichnet wurde, eingebracht und mit sauren Additiven über eine Leitung 3 zur Absenkung der Viskosität versetzt wurde. Die sauren Additive, wie beispielsweise Sand 4, wurden gemeinsam mit über die Leitung 5 zugeführtem Heißgas vorgewärmt, bevor sie in den Mischer gelangen. Im Mischer wurde gleichzeitig eine Sedimentation vorgenommen, wobei auf einem Rohstahlbad 6 die entstahlte Mischschlacke 7 aufschwimmt. Die Mischschlacke 7 wurde in der Folge in eine erste Reduktionsstufe 8 eingebracht, welche von einem Eisenbadreaktor gebildet ist. Das Eisenbad ist hiebei mit 9 bezeichnet, wobei auf dieses Eisenbad aufschwimmend die Mischschlacke 7 aufgebracht wird. Das Eisenbad wird über Badelektroden 10 beheizt. Als Reduktionsmittel wird Erdgas 11 bzw. Verbrennungssauerstoff 12 über Leitungen zugeführt, wobei der Reaktor als bodenblasender Reaktor ausgebildet ist, und die Verbrennungsprodukte, wie beispielsweise Wasserstoff und Kohlenmonoxid, durch das Eisenbad hindurchtreten und in der Schlacke eine Reduktion des Eisens sowie ggf. von Mangan und Chrom bewirken.

Die eisenfreie Mischschlacke gelangt über einen Kanal 13 in die zweite Reduktionsstufe. Der zweite Reaktor ist induktiv beheizt, wobei dem Hochfrequenzheizstrom ein Mittelfrequenzfeld überlagert sein kann, wodurch das vorgelegte Eisenbad induktiv gerührt werden kann. Als weitere Rührvorrichtung kann mittels Eintragdüsen Stickstoff oder Argon eingespült werden, wobei oberhalb des Schlackenbades eine Schutzgasatmosphäre 15 ausgebildet wird. Durch die Rührwirkung im Reaktor kann die Reaktionskinetik wesentlich verbessert werden, sodaß eine vollständige Reduktion der Vandiumoxide gelingt. Als Reduktionsmedium wird bei der in der Zeichnung schematisch dargestellten Ausführungsform ein Calziumdraht 16 verwendet, welcher von einer Calziumdrahtabspulmaschine 17 über die Inertgasatmosphäre und durch die Schlacke hindurch in das Eisenbad eingebracht wird. Analog kann Aluminiumpulver z.B. dispergiert im Stickstoffgasstrom eingebracht werden, wobei die Einbringung wiederum in das Eisenbad erfolgt. Vanadiumoxid geht hiebei praktisch quantitativ in das Eisenbad über, wobei die verbliebene Restschlacke nunmehr folgende Analyse aufwies:

| Komponente | Anteil % |
|---|---|
| SiO₂ | 34 |
| Al₂O₃ | 1.6 |
| Fe₂O₃ | - |
| CaO | 46 |
| MgO | 4.3 |
| SO₃ | 0.4 |
| K₂O | 0.2 |
| Na₂O | 0.4 |
| TiO₂ | 12.5 |
| Cr₂O₃ (Cr) | - |
| Mn₂O₃ | - |
| P₂O₅ | - |
| V₂O₅ (V) | - |

Diese schmelzflüssige Schlacke wurde nun konventionell über einem Wassergranulator 18 (12 Gewichtsteile Wasser pro Gewichtsteil Schlacke) rasch abgekühlt und erstarrte dabei zu einem glasigen Produkt. Nach Trocknung und Mahlung stellte diese Schlacke eine wertvolle Mischzement-Komponente 19 dar. Es wurde ein hydraulische Index nach Keil von 98 % (nach 28 Tagen) erhalten. Diese Schlacke kann im Mischzement bis zu 80 % Klinker ersetzen.

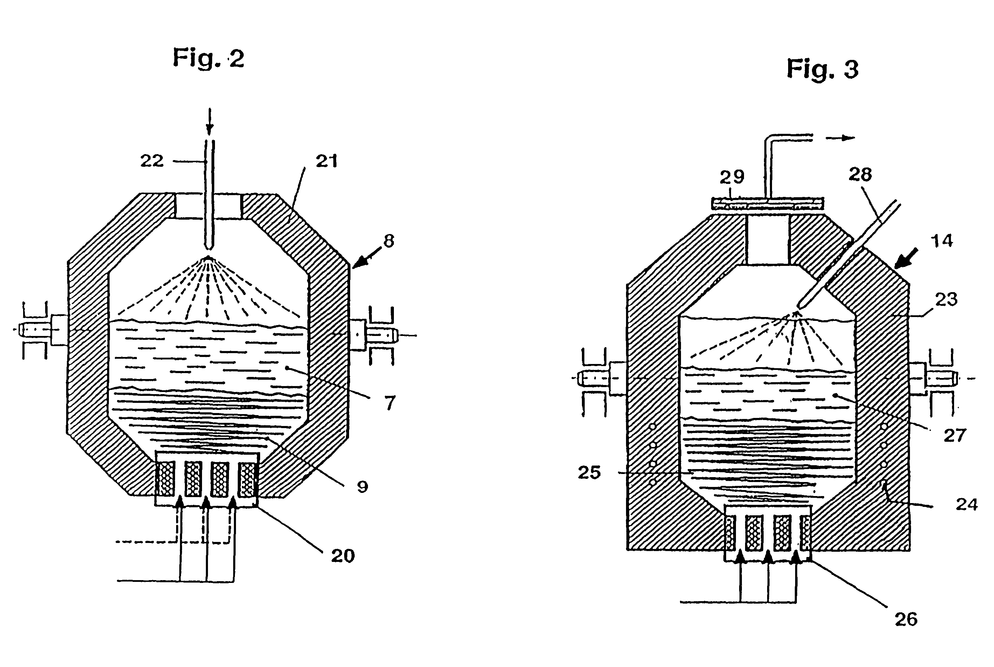

In Fig.2 ist das Eisenbad in der ersten Reduktionsstufe wiederum mit 9 bezeichet. Durch die in einem Düsenstein 20 angeordenten Bodendüsen wird Kohlenstoff mit Inertgas und Al₂O₃ und SiO₂ mit Sauerstoff eingeblasen. Der Eisenbadreaktor 21 ist als schwenkbarer Konverter ausgebildet, und es wird auf die Schlacke 7 O₂ und/oder Luft zur zusätzlichen Beheizung über eine Lanze 22 aufgeblasen. Die Reduktion des Schlacken-FeO-Gehaltes wird bei Temperaturen um 1500° C auf 2 bis 5 Gew.% geführt, sodaß Cr in der Schlacke verbleibt.

In Fig.3 ist ein schwenkbarer Reaktor für die zweite Reduktionsstufe 14 dargestellt. Der zweite Reaktor 23 ist wiederum als schwenkbarer Konverter ausgebildet und weist eine Induktionsspule 24 zur Hochfrequenzbeheizung auf. Die noch Rest-FeO enthaltende Schlacke wird über einem Fe-Bad 25, dessen Reduktionspotential durch Einblasen von Al, FeSi, CrC oder VC mit Inertgas wie z.B. Argon durch den Düsenstein 26 erhöht wird, weiter reduziert, wobei V und Cr ins Bad gelangen. Die Cr- und V-freie Schlacke 27 wird in der Folge abgezogen. Zusätzlich kann hier eine Beheizung durch Plasmabrenner 28 mit H₂ erfolgen, wobei Temperaturen zwischen 1700 und 1800° C erzielt werden. Gegebenenfalls kann die zweite Reduktion unter vermindertem Druck vorgenommen werden, wofür eine Absaugeinrichtung 29 vorgesehen sein kann.

### Beispiel 2:

Aus chromhältiger Stahlwerksschlacke wird durch Verschneiden mit Hochofenschlacke ein Zementklinkerzwischenprodukt, chromfreier Stahl sowie synthetisches Chromerz hergestellt. Die Ausgangsschlacken hatten folgende Richtanalyse:

| Stahlschlackenanalyse | |
|---|---|
| Komponente | Anteil % |
| SiO₂ | 16 |
| Al₂O₃ | 1 |
| CaO | 50 |
| MgO | 3 |
| MnO | 3 |
| Cr₂O₃ | 0,5 |
| Fe₂O₃ | 15 |
| (Fe)met | 10 |

| Hochofenschlackenanalyse | |
|---|---|
| Komponente | Anteil % |
| SiO₂ | 37 |
| Al₂O₃ | 13 |
| CaO | 32 |
| MgO | 10 |
| MnO | 2 |
| TiO₂ | 1 |
| K₂O | 2 |
| Na₂O | 0,5 |

Die beiden Flüssigschlacken werden im Verhältnis 60 % Stahlwerks- zu 40 % Hochofenschlacke gemischt. Pro Tonne Schlackengemisch sedimentieren 60 kg Rohstahl aus der Stahlwerksschlacke.

Die entstandene Mischschlacke hat folgende Zusammensetzung:

| Mischschlackenanalyse | |
|---|---|
| Komponente | Anteil % |
| SiO₂ | 27 |
| Al₂O₃ | 6 |
| CaO | 47 |
| MgO | 3 |
| MnO | 3 |
| Cr₂O₃ | 0,4 |
| Fe₂O₃ | 10 |
| TiO₂ | 0,4 |
| K₂O | 0,8 |
| Na₂O | 0,2 |

Diese Mischschlacke wurde im Reduktionsofen bei 1400° C 1 Stunde lang mit Koks reduziert. Dabei entstand eine Endschlacke mit folgender Zusammensetzung:

| Endschlackenanalyse | |
|---|---|
| Komponente | Anteil % |
| SiO₂ | 30 |
| Al₂O₃ | 7 |
| CaO | 52 |
| MgO | 3 |
| Cr₂O₃ | 0,03 |
| TiO₂ | 0,5 |
| K₂O | 0,9 |
| Na₂O | 0,2 |

Diese Schlacke wurde mit 3 Nm³ Luft/kg gekühlt. Es entstand eine hydraulisch aktive Schlacke sowie ein Heißgas mit 650° C Temperatur. Pro Tonne Schlacke entstanden 70 kg Roheisen mit 7,5 % C sowie 4 % Cr. Der Reduktionsreaktor wurde so lange gefahren, bis der Reaktor mit 15 % Schlacke, bezogen auf Roheisen gefüllt war. Der Schlackenfluß wurde gestoppt, und es wurde mit 98 kg O₂/t Roheisen gefrischt. Dabei wurde Chrom praktisch vollständig verschlackt, und die aufliegenden 262 kg Schlacke hatte folgende Zusammensetzung:

| Chromschlackenanalyse | |
|---|---|
| Komponente | Anteil % |
| SiO₂ | 18 |
| Al₂O₃ | 5 |
| CaO | 30 |
| MgO | 2 |
| TiO₂ | 0,3 |
| K₂O | 0,5 |
| Na₂O | 0,1 |
| Cr₂O₃ | 23 |
| Fe₂O₃ | 20 |

Diese Chromschlacke kann direkt der Chromgewinnung (z.B. Ferrochrom) zugeführt werden. Bei der zweiten Reduktion unter entsprechend größerem Reduktionspotential wird metallisches Chrom oder FeCr-Legierung gewonnen.

## Patentansprüche

1. Verfahren zur Herstellung von hydraulischen Bindemitteln, Rohstahl und/oder Legierungen wie z.B. FeCr oder FeV aus chrom- und/oder vanadiumhaltigen basischen Stahlschlacken, dadurch gekennzeichnet, daß die flüssige Stahlschlacke mit einem Zusatz aus der Gruppe Hochofenschlacke, Elektro-Lichtbogen-Ofenschlacke, Stäube aus der Stahlherstellung, metallischen Abfallstoffen oder Müllverbrennungsrückständen und/oder mit sauren Additiven zur Absenkung der Viskosität versetzt wird, worauf Stahl aus der flüssigen Schlacke sedimentiert wird, und die verbleibende Schlacke in einer ersten Reduktionsstufe auf einen Eisenoxidgehalt von unter 5 Gew.% und über 1 Gew.% zu metallischem Eisen reduziert wird, worauf die verbleibende Schackenschmelze in einer zweiten Reduktionsstufe mit gegenüber der ersten Reduktionsstufe größerem Reduktionspotential zu metallischem Cr oder V oder deren Eisenlegierungen weiter reduziert wird und die hydraulisch aktive Schlacke abgetrennt wird.

2. Verfahren nach Anspruch 1, dadurch gekennzeichnet, daß der Eisenoxidgehalt der Schlacke in der ersten Reduktionsstufe größer 2 Gew.% gehalten wird.

3. Verfahren nach Anspruch 1, dadurch gekennzeichnet, daß die Schlackenmischung im Reduktionsreaktor bei Temperaturen von 1400° C bis 1600° C, insbesondere 1450° C wenigstens 30 Minuten, vorzugsweise 1 Stunde reduziert wird.

4. Verfahren nach Anspruch 1, 2 oder 3, dadurch gekennzeichnet, daß als saure Additive (4) SiO₂ und/oder Al₂O₃-haltige Additive wie z.B. Sand, Bauxit oder Mergel eingesetzt werden.

5. Verfahren nach einem der Ansprüche 1 bis 4, dadurch gekennzeichnet, daß die erste Reduktion (8) mit Kohlenstoffträgern wie z.B. Koks, Kohle oder Synthesegas vorgenommen wird.

6. Verfahren nach einem der Ansprüche 1 bis 5, dadurch gekennzeichnet, daß die erste Reduktion (8) über einem Eisenbad durchgeführt wird.

7. Verfahren nach einem der Ansprüche 1 bis 6, dadurch gekennzeichnet, daß in der ersten Reduktionsstufe Sauerstoff durch das Eisenbad und/oder auf das Schlackenbad geblasen wird.

8. Verfahren nach einem der Ansprüche 1 bis 7, dadurch gekennzeichnet, daß die zweite Reduktion (14) unter Zusatz von Ca, Al, Si und/oder Fe als Reduktionsmittel vorgenommen wird.

9. Verfahren nach Anspruch 8, dadurch gekennzeichnet, daß die Reduktionsmittel für die zweite Reduktion (14) einem Eisenbad zudosiert werden.

10. Verfahren nach einem der Ansprüche 1 bis 9, dadurch gekennzeichnet, daß die zweite Reduktion (14) unter wenigstens teilweise inertisierter, vorzugsweise N₂-freier Atmosphäre vorgenommen wird.

11. Verfahren nach einem der Ansprüche 1 bis 10, dadurch gekennzeichnet, daß die Cr- und V-freie Schlacke mit Wasser granuliert und zu hydraulisch aktiven Bindemitteln bzw. Bindemitteladditiven aufgearbeitet wird.

12. Verfahren nach einem der Ansprüche 1 bis 11, dadurch gekennzeichnet, daß die sauren Additive (4) vorgewärmt in die flüssige Schlacke (2) eingebracht werden.

13. Verfahren nach einem der Ansprüche 1 bis 12, dadurch gekennzeichnet, daß die Reduktionsstufen elektrisch beheizt betrieben werden.

14. Verfahren nach einem der Ansprüche 1 bis 13, dadurch gekennzeichnet, daß dem aufschwimmenden Schlackenbad im Reduktionsreaktor Quarzsand oder Kalk zugesetzt wird und daß das Metallbad zu Stahl gefrischt wird.

15. Verfahren nach einem der Ansprüche 1 bis 14, dadurch gekennzeichnet, daß flüssige Stahlschlacke in einer Menge von 50 bis 70 Gew.% der Schlackenmischung eingesetzt wird.

16. Verfahren nach einem der Ansprüche 1 bis 15, dadurch gekennzeichnet, daß der Reduktionsreaktor so lange betrieben wird, bis die Schlackenmenge 10 Gew.% bis 20 Gew.% bezogen auf das Metallbad erreicht, worauf das Roheisen zu Stahl gefrischt und Cr, V und weitere Legierungselemente verschlackt werden.

17. Verfahren nach Anspruch 16, dadurch gekennzeichnet, daß die gebildete Chromschlacke zur Herstellung von Ferrochrom eingesetzt wird.

18. Verfahren nach einem der Ansprüche 1 bis 17, dadurch gekennzeichnet, daß das Frischbad durch Zugabe von Schrott oder Eisencarbid gekühlt wird.

19. Verfahren nach einem der Ansprüche 1 bis 18, dadurch gekennzeichnet, daß die Einsatzstoffe für die Schlackenmischung flüssig miteinander vermischt werden und in einem kippbaren Konverter vermischt werden.

## Claims

1. A process for producing hydraulic binders, crude steel and/or alloys such as, e.g., FeCr or FeV from chromium-containing and/or vanadium-containing basic steel slags, characterized in that the liquid steel slag is supplemented with an admixture from the group of blast furnace slag, electric arc furnace slag, dusts from steel production, metallic waste substances or waste incineration residues and/or with acidic additives for lowering its viscosity, whereupon steel is sedimented from the liquid slag and the remaining slag is reduced to metallic iron in a first reduction stage to an iron oxide content of below 5 % by weight and above 1 % by weight, whereupon the remaining slag melt is further reduced to metallic Cr or V or iron alloys thereof in a second reduction stage at a reduction potential higher than that of the first reduction stage and the hydraulically active slag is separated.

2. A process according to claim 1, characterized in that the iron oxide content of the slag in the first reduction stage is kept to be larger than 2 % by weight.

3. A process according to claim 1, characterized in that the slag mixture is reduced in the reduction reactor at temperatures of from 1400°C to 1600°C and, in particular, 1450°C for at least 30 minutes and, preferably, 1 hour.

4. A process according to claim 1, 2 or 3, characterized in that SiO₂ and/or Al₂O₃-containing additives such as, e.g., sand, bauxite or marl are used as acidic additives (4).

5. A process according to any one of claims 1 to 4, characterized in that the first reduction (8) is effected with carbon carriers such as, e.g., coke, coal or synthesis gas.

6. A process according to any one of claims 1 to 5, characterized in that the first reduction (8) is carried out over an iron bath.

7. A process according to any one of claims 1 to 6, characterized in that oxygen is blown through the iron bath and/or onto the slag bath in the first reduction stage.

8. A process according to any one of claims 1 to 7, characterized in that the second reduction (14) is effected while adding Ca, Al, Si and/or Fe as reducing agents.

9. A process according to claim 8, characterized in that the reducing agents for the second reduction (14) are dosed into an iron bath.

10. A process according to any one of claims 1 to 9, characterized in that the second reduction (14) is effected under an atmosphere rendered inert at least partially and, preferably, free of N₂.

11. A process according to any one of claims 1 to 10, characterized in that the slag free of Cr and V is granulated with water and worked up to hydraulically active binders or binder additives.

12. A process according to any one of claims 1 to 11, characterized in that the acidic additives (4) are introduced into the liquid slag (2) in the preheated state.

13. A process according to any one of claims 1 to 12, characterized in that the reduction stages are operated by being electrically heated.

14. A process according to any one of claims 1 to 13, characterized in that quartz sand or lime is added to the floating slag bath in the reduction reactor and that the metal bath is refined to steel.

15. A process according to any one of claims 1 to 14, characterized in that liquid steel slag is charged in an amount of from 50 to 70 % by weight of the slag mixture.

16. A process according to any one of claims 1 to 15, characterized in that the reduction reactor is operated until the amount of slag has reached 10 to 20 % by weight, based on the metal bath, whereupon the pig iron is refined to steel and Cr, V and other alloying elements are slagged.

17. A process according to claim 16, characterized in that the chromium slag formed is used for the production of ferrochromium.

18. A process according to any one of claims 1 to 17, characterized in that the refining bath is cooled by adding scrap or iron carbide.

19. A process according to any one of claims 1 to 18, characterized in that the charging substances for the slag mixture are mixed together in the liquid state and are mixed in a tiltable converter.

## Revendications

1. Procédé de fabrication de liants hydrauliques, d'acier brut et/ou d'alliages tels que, par exemple, FeCr ou FeV à partir de scories d'acier basiques contenant du chrome et/ou du vanadium, caractérisé en ce qu'on mélange les scories d'acier liquides avec un additif du groupe des scories de haut fourneau, des scories d'arc électrique, des poussières de la fabrication de l'acier, des déchets métalliques ou des résidus de combustion de déchets et/ou avec des additifs acides pour abaisser la viscosité, l'acier se sédimentant à partir des scories liquides, et les scories restantes étant réduites en fer métal dans une première étape de réduction à une teneur en oxyde de fer inférieure à 5% en poids et supérieure à 1% en poids, la masse fondue des scories restantes étant réduite plus avant dans une seconde étape de réduction, avec un plus grand potentiel de réduction par rapport à la première étape de réduction, en Cr ou V métalliques ou en leurs alliages de fer, et en ce qu'on sépare les scories hydraulytiquement actives.

2. Procédé selon la revendication 1, caractérisé en ce qu'on maintient la teneur en oxyde de fer des scories dans la première étape de réduction au-dessus de 2% en poids.

3. Procédé selon la revendication 1, caractérisé en ce qu'on réduit le mélange de scories dans le réacteur de réduction à des températures de 1400°C à 1600°C, en particulier de 1450°C, pendant au moins 30 minutes, de préférence 1 heure.

4. Procédé selon la revendication 1, 2 ou 3, caractérisé en ce qu'on utilise comme additif acide (4) des additifs contenant SiO₂ et/ou Al₂O₃ comme par exemple le sable, la bauxite ou la marne.

5. Procédé selon l'une des revendications 1 à 4, caractérisé en ce qu'on procède à la première réduction (8) avec des porteurs de carbone comme par exemple le coke, le charbon ou le gaz de synthèse.

6. Procédé selon l'une des revendications 1 à 5, caractérisé en ce qu'on procède à la première réduction (8) sur un bain de fer.

7. Procédé selon l'une des revendications 1 à 6, caractérisé en ce que, dans la première étape de réduction, on fait barboter de l'oxygène à travers le bain de fer et/ou sur le bain de scories.

8. Procédé selon l'une des revendications 1 à 7, caractérisé en ce qu'on procède à la seconde réduction (14) avec addition de Ca, Al, Si et/ou Fe comme réducteur.

9. Procédé selon la revendication 8, caractérisé en ce qu'on dose les réducteurs pour la seconde réduction (14) dans un bain de fer.

10. Procédé selon l'une des revendications 1 à 9, caractérisé en ce qu'on procède à la seconde réduction (14) sous une atmosphère au moins partiellement rendue inerte, de préférence dépourvue d'azote.

11. Procédé selon l'une des revendications 1 à 10, caractérisé en ce qu'on granule les scories dépourvues de Cr et de V avec de l'eau et en ce qu'on les transforme en liants, ou selon les cas, en additifs de liants hydraulytiquement actifs.

12. Procédé selon l'une des revendications 1 à 11, caractérisé en ce qu'on introduit les additifs acides (4) sous forme préchauffée dans les scories liquides (2).

13. Procédé selon l'une des revendications 1 à 12, caractérisé en ce qu'on fait fonctionner les étapes de réduction avec un chauffage électrique.

14. Procédé selon l'une des revendications 1 à 13, caractérisé en ce qu'on ajoute au bain de scories surnageant dans le réacteur de réduction, du sable quartzeux ou de la chaux, et en ce qu'on affine le bain de métal en acier.

15. Procédé selon l'une des revendications 1 à 14, caractérisé en ce qu'on utilise des scories d'acier liquides en une quantité de 50 à 70% en poids du mélange de scories.

16. Procédé selon l'une des revendications 1 à 15, caractérisé en ce qu'on fait fonctionner le réacteur de réduction jusqu'à ce que la quantité de scories atteigne 10% en poids à 20% en poids par rapport au bain de métal, après quoi on affine le fer brut en acier et on scorifie Cr, V et les autres éléments d'alliage.

17. Procédé selon la revendication 16, caractérisé en ce qu'on utilise les scories de chrome formées pour la fabrication de ferrochrome.

18. Procédé selon l'une des revendications 1 à 17, caractérisé en ce qu'on refroidit le bain d'affinage par addition de débris de fer ou de carbure de fer.

19. Procédé selon l'une des revendications 1 à 18, caractérisé en ce qu'on mélange entre eux sous forme liquide les matériaux utilisés pour le mélange de scories et en ce qu'on les mélange dans un convertisseur basculant.
